# EUROPÄISCHE PATENTSCHRIFT

(11) **EP 0 468 397 B1**
(45) Veröffentlichungstag und Bekanntmachung des Hinweises auf die Patenterteilung: **15.02.1995**
(21) Anmeldenummer: 91112232.3
(22) Anmeldetag: 22.07.1991
(51) Int. Cl.: E01B 35/12, G01G 19/04

(54) **Messstrecke für Schienenfahrzeuge**
Measurement line for railway vehicles
Ligne de mesure pour véhicules ferroviaires

(30) Priorität: 26.07.1990 DE 4023745
(43) Veröffentlichungstag der Anmeldung: 29.01.1992
(73) Patentinhaber: Pfister Messtechnik GmbH, 86165 Augsburg (DE)
(72) Erfinder: Häfner, Hans Wilhelm, W-8890 Aichach-Walchshofen (DE)
(74) Vertreter: Kahler, Kurt, Dipl.-Ing.

(56) Entgegenhaltungen:
- EP-A- 0 236 703
- EP-A- 0 249 905
- EP-A- 0 338 553
- WO-A-89/10651
- DE-A- 3 804 691

## Beschreibung

Die Erfindung betrifft eine Meßstrecke für Schienenfahrzeuge gemäß dem Oberbegriff des Patentanspruchs 1.

Aus der EP-A-0 338 553 ist eine gattungsgemäße Meßstrecke für Schienenfahrzeuge bekannt, die zur Verwendung in einem Schienenstrang einen Rahmen zur Aufnahme der Schienen und Meßwertaufnehmer zur Ermittlung der an den Schienen wirkenden Vertikalkräfte aufweist. Die bekannte Einrichtung soll bei guter Meßgenauigkeit einen einfachen Aufbau aufweisen und ohne Eingriffe in den Gleisunterbau leicht in einen vorhandenen Schienenstrang einzubauen sein. Dazu besteht der Rahmen aus parallel zu den Schienen angeordneten Längsträgern und aus Querträgern, so daß die Schienen über die Querträger auf die Längsträger abgestützt sind, wobei die Meßwertaufnehmer zwischen den Schienen und den Längsträgern angeordnet sind.

Die hier vorgeschlagene Konstruktion mittels eines Rahmens mit mehreren Längsträgern und Querträgern ist aufwendig und bringt aufgrund deren Durchbiegung eine Verfälschung der Meßergebnisse mit sich, so daß nur eine begrenzte Meßgenauigkeit erreichbar ist. Weiterhin können durch Dehnungen, z. B. bei starker Sonneneinstrahlung Spannungen im Rahmen und im Meßwertaufnehmer hervorgerufen werden, die die Meßgenauigkeit nachteilig beeinflussen. Zudem sind durch die Rahmenkonstruktion sehr viele Befestigungspunkte auf dem Gleisunterbau erforderlich, so daß diese Waage für Schienenfahrzeuge relativ aufwendig ist.

Demzufolge liegt der Erfindung die Aufgabe zugrunde, eine Meßstrecke für Schienenfahrzeuge anzugeben, die bei einfachstem Aufbau eine Messung verschiedenster Parameter mit relativ hoher Meßgenauigkeit gestattet.

Die erfindungsgemäße Meßstrecke ist im Patentanspruch 1 gekennzeichnet.

Da der Meßwertaufnehmer in einfacher Weise vertieft in einer üblichen Schwelle ausgebildet ist, entfällt die zusätzliche Rahmenkonstruktion der bekannten Einrichtung. Durch die direkte Abstützung der Meßwertaufnehmer in den Schwellen ergibt sich eine hohe Stabilität und Meßgenauigkeit der Meßwertaufnehmer.

Da die Meßwertaufnehmer mit einem topfförmigen Gehäuse und einem darin unter Zwischenschaltung eines elastomeren Materials in der Schwelle selbst eingelassen sind, ist eine genaue Fixierung der Schienen gegenüber dem Gleisunterbau zu erreichen, zumal durch den mit elastomerem Material gefüllten sehr engen Ringspalt der Meßkolben in horizontaler Ebene sehr genau festgelegt ist, so daß die Bewegungsmöglichkeit in vertikaler Meßrichtung jedoch nicht nachteilig beeinflußt wird. Da sämtliche Horizontalkräfte über das elastomere Material auf die Schwelle abgeleitet werden, ergibt sich eine genaue Messung der gewünschten Vertikalkräfte selbst beim Bremsen oder Beschleunigen des Schienenfahrzeugs. Durch die allseitige Einbettung des Meßkolbens in elastomeres Material ist zudem eine gewisse Geräuschdämpfung des Schienenstranges zu erreichen, so daß die vorgeschlagene Meßstrecke auch in lärmisolierten Schienensträngen Anwendung finden kann.

Da keine außenliegenden, störenden Teile wie Längsträger und dergleichen durch die vertiefte Anordnung des Meßwertaufnehmers vorhanden sind, kann eine derartige Schwelle selbst im Weichenbereich eines Schienenstranges montiert sein. Dies gilt insbesondere für die vorteilhafte Ausgestaltung, wonach der Meßwertaufnehmer bündig mit der Oberseite der Schwellen versenkt in diesen angeordnet ist. Hierbei ist in vorteilhafter Weise das topfförmige Gehäuse des Meßwertaufnehmers in die Schwelle eingepaßt, so daß keine zusätzlichen Fixierungsmaßnahmen erforderlich sind. Die hierzu nötige Bohrung für die Aufnahme des topfförmigen Gehäuses kann bereits beim Gießen der Schwellen ausgespart werden oder nachträglich durch einen Kronenbohrer eingebracht werden.

Andererseits kann die Aussparung in den Schwellen zur Aufnahme der Meßwertaufnehmer auch mit ebenen Flächen hergestellt werden, wobei der dazu erforderliche Einschnitt mit üblichen Werkzeugen wie Trennscheibe und Winkelschleifer auf einfache Weise hergestellt wird. In einen derartigen Einschnitt kann der Meßwertaufnehmer durch seitliche Halterungen oder eine flanschartige Gestaltung des Gehäuses durch übliche Verschraubung mittels Dübeln oder Schwerlastankern befestigt werden. Bei der letzteren Möglichkeit kann die Schiene sogar im Schienenstrang eingebaut bleiben, wobei der Meßwertaufnehmer seitlich in die Schwellen eingeschoben wird und dann mittels der beschriebenen seitlichen Halterungen fixiert wird. Auf diese Weise ist selbst bei einem Defekt eines Meßwertaufnehmers ein rascher Ausbau und Austausch möglich.

Die so ausgebildeten Schwellen eignen sich zur einfachen Zusammenstellung von Meßstrecken zur statischen oder dynamischen Bestimmung der Radlast, Achslast, des Gesamtgewichts eines Einzelfahrzeugs bzw. eines Zuges.

Weitere vorteilhafte Ausgestaltungen sind Gegenstand der abhängigen Patentansprüche. Ausführungsbeispiele der Erfindung werden nachfolgend unter Bezugnahme auf die Zeichnung näher erläutert.
Es zeigen:
- Fig. 1: einen Querschnitt durch einen Schienenstrang mit einem Längsschnitt durch eine Schwelle einer ersten Ausführungsform;
- Fig. 2: eine Seitenansicht auf eine Schiene mit einem Querschnitt durch die Schwelle; und
- Fig. 3: eine alternative Befestigungsart des Meßwertaufnehmers in Draufsicht auf den Schienenstrang.

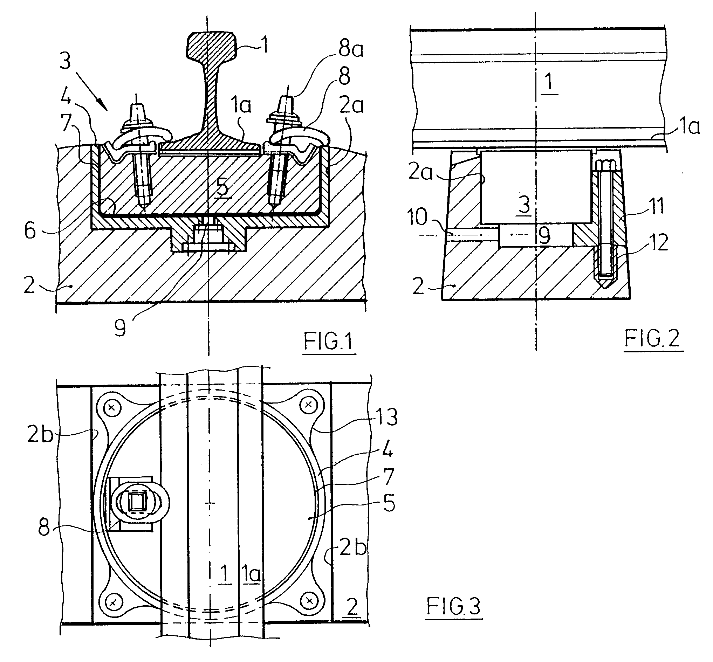

In Fig. 1 ist eine Schiene 1 eines Schienenstranges im Querschnitt dargestellt. Die Schiene 1 liegt mit ihrem Fuß 1a auf dazu quer verlaufenden, im Längsschnitt dargestellten Schwellen 2 auf, die vorzugsweise aus Beton, aber auch aus Holz oder Metall bestehen können. Der Schienenfuß 1a stützt sich unmittelbar auf einen Meßwertaufnehmer 3 ab. Dieser umfaßt im wesentlichen ein topfförmiges Gehäuse 4, in dessen Inneren ein Meßkolben 5 unter Bildung eines engen Ringspaltes 7 eingesetzt ist, der mit elastomerem Material 6 im wesentlichen bis zur Oberseite des Meßkolbens 5 gefüllt ist. Dieses elastomere Material 6, insbesondere ein Silikon erstreckt sich auch im inneren Bodenbereich des Gehäuses 4 über die Bodenfläche des Meßkolben 5.

Der Schienenfuß 1a ist mittels beidseitiger Spannklemmen 8 mit der Oberseite des Meßkolbens 5 fest verbunden, die mittels Befestigungsschrauben 8a gegen den Schienenfuß 1a verspannt werden. In der linken Hälfte ist dabei die Spannposition dargestellt, während in der rechten Hälfte die Lösestellung der Spannklemmen 8 gezeigt ist, in der die Schiene 1 abgehoben werden kann. Vorzugsweise mittig im topfförmigen Gehäuse 4 ist ein Drucksensor 9 angeordnet, der bei Belastung der Schiene 1 unter entsprechendem Kraftfluß über den Meßkolben 5 und das elastomere Material 6 im Ringspalt 7 beaufschlagt wird, das eine exakte Zentrierung des Meßkolbens 5 sichert und eine Unempfindlichkeit gegen seitliche Kraftkomponenten gewährleistet.

Der Aufbau des Meßwertaufnehmers 3 zusammen mit den verwendeten Sensoren und geeigneten Materialien für das elastomere Material 6 ist in der EP-C-0 145 001 angegeben, auf die hier ausdrücklich hingewiesen wird. Obwohl in den Ausführungsbeispielen eine Meßwertaufnehmeranordnung nur für eine Schiene 1 gezeigt ist, kann selbstverständlich die Schwelle 2 für die linke und rechte Schiene je einen Meßwertaufnehmer 3 eingelassen enthalten.

In Fig. 2 ist eine Seitenansicht auf eine Schiene 1 mit einem Querschnitt durch die Schwelle 2 dargestellt. Dabei ist in der linken Hälfte der Einbau des Meßwertaufnehmers 3 in der Ausführung gemäß Fig. 1 gezeigt. Der Meßwertaufnehmer 3 ist vertieft in einer zylindrischen Bohrung 2a in der Schwelle 2 eingesetzt, so daß der Meßkolben 5 etwa bündig mit der Oberseite der Schwelle 2 abschließt. Vom Drucksensor 9 führt ein Kabelkanal 10 nach außen, so daß mehrere oder gar eine Vielzahl von derartigen Meßwertaufnehmern 3 in mehreren Schwellen 2 einzeln oder gruppenweise mit einer nicht näher dargestellten Auswerteschaltung verbunden werden können, um entsprechende Stand- oder Fahrtwägungen oder Achslastwägungen für Eisenbahnwaggons durchführen zu können.

In der rechten Hälfte der Fig. 2 ist eine alternative Anbringungsart des Meßwertaufnehmers 3 dargestellt, wobei anstatt einer Bohrung innerhalb der Schwelle 2 ein Einschnitt 2b (vgl. auch Fig. 3) vorhanden ist, der seitlich durch eine Halterung 11 abgeschlossen ist und hierbei der eingesetzte Meßwertaufnehmer 3 sicher gelagert ist. Die Halterung 11 für den Meßwertaufnehmer 3 wird beispielsweise mittels Dübeln oder sog. Schwerlastankern 12 mit der Schwelle 2 verschraubt, wobei bei dieser Ausführung entsprechend spiegelbildlich auch eine zweite Halterung 11 auf der linken Seite angeordnet wäre.

In Fig. 3 ist eine weitere Ausführungsform der Halterung des Meßwertaufnehmers 3 in Draufsicht auf den Schienenstrang 1 gezeigt, wobei das Gehäuse 4 in seinem unteren Bereich einen Befestigungsflansch 13 aufweist, mit dem das Gehäuse 4 des Meßwertaufnehmers 3 im Einschnitt 2b der Schwelle 2 verschraubt werden kann. Sofern für den Bereich der Meßstrecke für Schienenfahrzeuge spezielle Schwellen 2 vorgesehen sind, können diese insgesamt etwas flacher gehalten werden, so daß bei insgesamt gleicher Aufbauhöhe nur ein unwesentlicher Einschnitt in der Schwelle 2 erforderlich ist. Ein derartiger Einschnitt 2b mit ebenen Begrenzungsflächen kann beispielsweise durch Aussparen beim Gießen der Betonschwelle 2 erreicht werden oder auf einfache Weise mittels Trennscheiben eingeschnitten werden.

Es sei darauf hingewiesen, daß der Schienenfuß 1a dieses Ausführungsbeispiels gegenüber der Ausführung in Fig. 1 noch tiefer im Meßkolben 5 versenkt angeordnet werden kann, um die Aufbauhöhe weiter zu reduzieren. In diesem Falle sind die in Fig. 1 seitlichen Bereiche des Meßkolbens 5, in dem die Spannklemmen 8 angeordnet sind, etwas erhöht ausgeführt, während die Bereiche am Umfang des Meßkolbens 5, über denen die Schiene 1 entlangläuft, vertieft angeordnet sind. Es ergibt sich somit eine konkav gewölbte Oberfläche des Meßkolbens 5, wobei dementsprechend auch der obere Rand des Gehäuses 4 im Bereich unter dem Schienenfuß 1a niedriger ausgeführt ist. Obwohl der Meßkolben 5 hier zylindrisch dargestellt ist, kann dieser auch oval oder rechteckig mit abgerundeten Kanten ausgeführt werden, wobei der Ringspalt 7 und das Gehäuse 4 eine entsprechende elliptische oder angenäherte Rechteck-Grundform aufweisen. Da die die Meßstrecke bildenden Schwellen 2 lediglich im normalen Kiesbett gegründet sind, kann zu Testzwecken auch der Bodendruck gemessen werden.

Obwohl bei den Ausführungbeispielen für jede Schwelle 2 ein individueller Meßwertaufnehmer 3 in diese eingelassen ist, besteht auch die Möglichkeit, mehrere dieser Meßwertaufnehmer 3 miteinander mechanisch zu verbinden, etwa auf einer Platte anzuordnen, die sich dann durch Einschnitte 2b mehrerer Schwellen 2 erstreckt.

Wird die Schwelle 2 aus einem nichtkriechenden Material, insbesondere Polymerbeton hergestellt, dann kann das Gehäuse 4 entfallen und der Meßkolben 5 unter Bildung des Ringspaltes 7 direkt in die dazu passende Öffnung eingesetzt werden.

Ein vorteilhaftes Merkmal besteht darin, daß eine drahtlose Übertragung der mit dem Drucksensor 9 erfaßten Daten zu einem Erfassungsgerät erfolgt. Hierbei wird ein Drucksensor verwendet, in dem bereits die dafür notwendigen Schaltungselemente, wie Verstärker- und Senderelemente integriert sind. Besonders bevorzugt wird die für den Betrieb des Drucksensors bzw. seiner Verstärker- und Senderelemente erforderliche elektrische Energie über einen Energiesender, bevorzugt eine Induktionsschleife eingekoppelt, die an der Unterseite des Schienenfahrzeugs, insbesondere der Lokomotive angebracht ist. Derartige Induktionsschleifenvorrichtungen sind bereits für andere Zwecke, etwa für die sogenannten INDUSI-Blockiersicherungen bekannt.

Die vom Drucksensor aufgenommenen Meßwerte können dann in der Erfassungsvorrichtung, die in der Lokomotive oder einem anderen Schienenfahrzeug untergebracht ist, gespeichert, angezeigt und/oder ausgedruckt werden.

Mit diesem Verfahren können auch andere Parameter und Meßwerte bestimmt und ausgewertet werden, wie beispielsweise die Anzahl der Achsen eines Zuges.

## Patentansprüche

1. Meßstrecke für Schienenfahrzeuge zur Verwendung in einem Schienenstrang mit Schwellen (2) zur Auflage von Eisenbahnschienen (1), die mit einem Meßwertaufnehmer (3) zur Ermittlung der auf die Schienen wirkenden Vertikalkräfte in Verbindung stehen,
dadurch gekennzeichnet, daß
der Meßwertaufnehmer (3) in einer Schwelle (2) selbst eingelassen und zur direkten Abstützung der Schiene (1) angeordnet ist.

2. Meßstrecke nach Anspruch 1, dadurch gekennzeichnet, daß der Meßwertaufnehmer (3) ein topfförmiges Gehäuse (4) mit darin unter Bildung eines Ringspalts (7) eingepaßtem Meßkolben (5) umfaßt, wobei der enge Ringspalt (7) mit einem elastomeren Material (6) gefüllt ist, das mit einem Drucksensor (9) in Kontakt ist.

3. Meßstrecke nach Anspruch 1 oder 2, dadurch gekennzeichnet, daß das Gehäuse (4) und der Meßkolben (5) bündig mit der Oberseite der Schwellen (2) abschließen, wobei vorzugsweise das Gehäuse (4) in eine Bohrung (2a) der Schwelle (2) eingepaßt ist.

4. Meßstrecke nach einem der Ansprüche 1 bis 3, dadurch gekennzeichnet, daß in der Schwelle (2) ein Einschnitt (2b) mit ebenen Begrenzungsflächen vorgesehen ist, in dem der Meßwertaufnehmer (3) mit einer Halterung (11) befestigt ist, die vorzugsweise als einstückig mit dem Gehäuse (4) geformter Befestigungsflansch (13) ausgebildet ist und von der Seitenfläche der Schwellen (2) in Schienenrichtung einsetzbar sein kann.

5. Meßstrecke nach einem der vorhergehenden Ansprüche, dadurch gekennzeichnet, daß die Schiene (1) an der Oberseite des Meßkolbens (5) mit Spannklemmen (8) befestigt ist, wobei vorzugsweise Befestigungsschrauben (8a) der Spannklemmen (8) im Meßkolben (5) einschraubbar angeordnet sind.

6. Meßstrecke nach einem der vorhergehenden Ansprüche, dadurch gekennzeichnet, daß die Schiene (1) im Meßkolben (5) vertieft angeordnet ist.

7. Meßstrecke nach einem der vorhergehenden Ansprüche, dadurch gekennzeichnet, daß der Meßwertaufnehmer (3) Elemente zur drahtlosen Aussendung der erfaßten Meßwerte und vorzugsweise auch Elemente zur drahtlosen Energieaufnahme von einem Energiesender, wie einer Induktionsschleife aufweist.

8. Meßstrecke nach einem der vorhergehenden Ansprüche, dadurch gekennzeichnet, daß die Schwelle (2) aus nichtkriechendem Material, insbesondere Polymerbeton hergestellt ist und der Meßwertaufnehmer (3) als zylindrische Vertiefung mit darin unter Bildung eines Ringspalts (7) eingepaßtem Meßkolben (5) ausgebildet ist, wobei der enge Ringspalt (7) mit einem elastomeren Material (6) gefüllt ist, das mit einem Drucksensor (9) in Kontakt ist.

9. Meßstrecke nach einem der vorhergehenden Ansprüche, dadurch gekennzeichnet, daß die Ausgänge der Meßwertaufnehmer (3) mit einer Auswertevorrichtung zur statischen oder dynamischen Messung von Rad- und Achslasten von Schienenfahrzeugen und zur Bestimmung der Gesamtlast eines Einzelfahrzeugs bzw. eines Zuges verbunden sind, die Ausgangssignale der Meßwertaufnehmer (3) vorzugsweise drahtlos auf die Auswertevorrichtung übertragen und mit gegebenenfalls unterschiedlicher Gruppenbildung ausgewertet werden.

10. Meßstrecke nach Anspruch 9, dadurch gekennzeichnet, daß die Auswertevorrichtung im Schienenfahrzeug, insbesondere in der Lokomotive angeordnet ist und der/die Meßwertaufnehmer (3) von dem Schienenfahrzeug, insbesondere der Lokomotive drahtlos, insbesondere über eine Induktionsschleife, mit Energie versorgt werden.

## Claims

1. A measurement line for railway vehicles, to be used in a rail track comprising sleepers (2) for supporting rails (1) connected to a transducer (3) provided for sensing the vertical forces acting on the rails,
characterized in that
said transducer (3) is embedded in a sleeper (2) itself and is arranged to directly support said rail (1).

2. The measurement line of claim 1, characterized in that said transducer (3) includes a pot-like housing (4) having fitted therein a gauge piston (5) via an annular gap (7), said narrow annular gap (7) being filled with an elastomeric material (6) contacting a pressure sensor (9).

3. The measurement line of either claim 1 or 2, characterized in that said housing (4) and said gauge piston (5) flush with the top surfaces of said sleepers (2), said housing (4) preferably being fitted in a hole (2a) of said sleeper (2).

4. The measurement line of any of claims 1 to 3, characterized in that said sleeper (2) is provided with a groove (2b) having planar boundary surfaces, said transducer (3) being fixed in said groove (2b) by a mounting support (11) preferably formed by an attachment flange (13) unitary with said housing (4) and being insertable in rail direction from the side surface of said sleepers (2).

5. The measurement line of any of the preceding claims, characterized in that said rail (1) is fixed to the top surface of said gauge piston (5) by strainers (8), wherein fixing screws (8a) of said strainers (8) are preferably arranged to be threaded into said gauge piston (5).

6. The measurement line of any of the preceding claims, characterized in that said rail (1) is recessed in said gauge piston (5).

7. The measurement line of any of the preceding claims, characterized in that said transducer (3) includes elements adapted for a wireless transmission of the detected measurement values, and preferably also includes elements for a wireless energy reception transmitted by an energy transmitter, such as an induction loop.

8. The measurement line of any of the preceding claims, characterized in that said sleeper (2) is made from a non-creeping material, in particular polymeric concrete, and said transducer (3) is formed as a cylindrical recess having fitted therein a gauge piston (5) via an annular gap (7), said narrow annular gap (7) being filled with an elastomeric material (6) contacting a pressure sensor (9).

9. The measurement line of any of the preceding claims, characterized in that the outputs of said transducers (3) are coupled to an evaluation means analyzing static or dynamic measurements of wheel and axle loads of railway vehicles, and determining the total load of a single vehicle or a train, respectively, the output signals of said transducers (3) preferably being transmitted in a wireless manner to said evaluation means and being analyzed, if need be, by way of different group formations.

10. The measurement line of claim 9, characterized in that the evaluation means is located within the railway vehicle, particularly within the locomotive engine, and the railway vehicle, in particular the locomotive engine, supplies energy to said transducer(s) (3) in a wireless manner, in particular via an induction loop.

## Revendications

1. Section de mesure pour véhicules ferroviaires à utiliser sur une voie ferrée comprenant des traverses (2) sur lesquelles sont posés des rails de chemin de fer (1), ceux-ci étant reliés à un transducteur (3) qui est destiné à déterminer les forces verticales agissant sur les rails, caractérisée par le fait que le transducteur (3) est enchâssé dans la traverse elle-même (2), et qu'il est disposé en vue de supporter directement le rail (1).

2. Section de mesure selon la revendication 1, caractérisée par le fait que le transducteur (3) comprend un boîtier en forme de cuvette (4) dans lequel un piston de mesure (5) est ajusté en formant un interstice annulaire (7), cependant que l'étroit interstice annulaire (7) est rempli par un élastomère (6) qui est en contact avec un capteur de pression (9).

3. Section de mesure selon la revendication 1 ou 2, caractérisée par le fait que le boîtier (4) et le piston de mesure (5) se terminent du côté supérieur des traverses (2) en étant alignés l'un sur l'autre, le boîtier (4) étant de préférence inséré dans un perçage (2a) de la traverse (2).

4. Section de mesure selon l'une des revendications 1 à 3, caractérisée par le fait qu'il est prévu dans la traverse (2) une entaille (2b) dont les surfaces de délimitation sont planes et dans laquelle le transducteur (3) est fixé par un élément de maintien (11), celui-ci étant réalisé de préférence sous la forme d'une bride de fixation (13) formée d'un seul tenant avec le boîtier (4), et pouvant être introduit dans la direction du rail depuis la surface latérale des traverses (2).

5. Section de mesure selon l'une des revendications précédentes, caractérisée par le fait que le rail (1) est fixé sur la face supérieure du piston de mesure (5) par des crampons de serrage (8), des vis de fixation (8a) des crampons de serrage (8) étant de préférence disposées en pouvant être vissées dans le piston de mesure (5).

6. Section de mesure selon l'une des revendications précédentes, caractérisée par le fait que le rail (1) est disposé en étant enfoncé dans le piston de mesure (5).

7. Section de mesure selon l'une des revendications précédentes, caractérisée par le fait que le transducteur (3) comporte des éléments destinés à la transmission sans fil des valeurs mesurées, et de préférence aussi des éléments pour recevoir sans fil de l'énergie qui provient d'un émetteur d'énergie comme une boucle d'induction.

8. Section de mesure selon l'une des revendications précédentes, caractérisée par le fait que la traverse (2) est fabriquée en un matériau résistant au fluage, et en particulier en béton au polymère, et que le transducteur (3) est réalisé sous la forme d'un renfoncement cylindrique dans lequel le piston de mesure (5) est enchâssé en formant un interstice annulaire (7), cependant que l'étroit interstice annulaire (7) est rempli par un élastomère (6) qui est en contact avec un capteur de pression (9).

9. Section de mesure selon l'une des revendications précédentes, caractérisée par le fait que les sorties des transducteurs (3) sont reliées à un dispositif d'exploitation des données qui est destiné à mesurer par voie statique ou dynamique les charges sur les roues et sur les essieux de véhicules ferroviaires et à déterminer la charge totale d'un véhicule individuel ou d'un train, respectivement, que les signaux de sortie des transducteurs (3) sont de préférence transmis sans fil au dispositif d'exploitation des données, et qu'ils sont exploités le cas échéant au moyen de la formation de groupes différents.

10. Section de mesure selon la revendication 9, caractérisée par le fait que le dispositif d'exploitation des données est disposé dans le véhicule ferroviaire, et en particulier dans la locomotive, et que le ou les transducteurs (3) sont alimentés sans fil en énergie par le véhicule ferroviaire, et en particulier par la locomotive, notamment par l'intermédiaire d'une boucle d'induction.
